# NEW EUROPEAN PATENT SPECIFICATION

(11) **EP 1 264 538 B2**
(45) Date of publication and mention of the opposition decision: **16.08.2017**
(45) Mention of the grant of the patent: 07.09.2005
(21) Application number: 02076614.3
(22) Date of filing: 23.04.2002
(51) Int. Cl.: A01J 7/02

(54) **A device for and a method of cleaning a milking machine, and a milking machine**
Vorrichtung und Verfahren zur Reinigung einer Melkmaschine und Melkmaschine
Dispositif et méthode de nettoyage d'une machine à traire et machine à traire

(30) Priority: 24.04.2001 NL 1017918
(43) Date of publication of application: 11.12.2002
(73) Proprietor: Lely Enterprises AG, 6300 Zug (CH)
(72) Inventor: Fransen, Renatus Ignatius Josephus, 3135 ZD Vlaardingen (NL)
(74) Representative: Octrooibureau Van der Lely N.V.

(56) References cited:
- EP-A1- 0 399 604
- EP-A1- 0 639 327
- EP-A1- 0 663 146
- EP-A2- 0 091 892
- EP-A2- 1 046 336
- WO-A-96/16536
- WO-A1-01/19173
- WO-A1-94/16552
- WO-A1-99/29162
- DE-A- 3 920 564
- NL-C- 1 007 727
- US-A- 5 826 536
- IPEMA A.H. ET AL: 'Prospects for automatic milking', 1992, PUDOC SCIENTIFIC, WAGENINGEN pages 262,263 - 291,321
- HOGEVEEN H. ET AL: 'Robotic Milking', August 2000, WAGENINGEN PERS, WAGENINGEN pages 19 - 31

## Description

The invention relates to a device according to the preamble of claim 1.

Such a device is known from Dutch patent application 1007727. It may sometimes occur that said device is cleaning at a moment when a farmer wishes to milk animals, which is undesirable, of course. Further the energy costs of such a device appear to be relatively high.

The invention aims at preventing these drawbacks or limiting them at least partially.

For that purpose, according to the invention a device for cleaning of the above-described type comprises the measures of the characterizing part of claim 1. The invention is based on the insight that with the known device the cleaning does not take into account the actual visits of the animals to the milking machine spread over the whole day. By activating the cleaning start device, according to the invention, by means of a cleaning start signal issued by the computer on the basis of historical data in relation to the points of time of the visits of the animals stored in the memory, it is made possible to select a favourable point of time for the cleaning. Thus one or more cleanings can be planned for simply and automatically.

Although the milking machine may be provided with a separate unit for determining the points of time of visit of the animals to the milking machine, the milking machine is preferably provided with an identification system for determining the identity of animals and detecting that animals visit the milking machine, the computer storing the points of time of the visits of the animals in the memory with the aid of data from the identification system. Usually such an identification system is already present in the milking machine, especially when the milking machine is constituted by an automatic milking machine having a robot arm for automatically connecting teat cups to the teats, so that this identification system can also be used for determining the points of time of visiting.

It is particularly advantageous when the computer comprises an analysis-unit for determining the off-peak periods in the visits to the milking machine. With the aid of the historical data, the computer then preferably issues an off-peak signal indicating that an off-peak period is expected. Thus it is possible to clean automatically during those periods when the milking machine is hardly visited, which minimises the inconvenience for the animals as a result of cleaning. The off-peak signal may be a cleaning start signal, but is preferably a separate signal issued at a predetermined point of time before the expected off-peak period, so that it is possible, if desired, to activate some preparative actions before the cleaning proper takes place.

When the average cleaning duration is stored in the memory of the computer it is possible for the computer to issue an activation signal for the cleaning start device, preferably on reaching the beginning of an off-peak period with an estimated duration which is at least comparable with the average cleaning duration. Thus an automatically starting cleaning is possible, the length of the off-peak period also being compared with the average cleaning duration. Especially when the off-peak period is not excessively shorter than the average cleaning duration, the cleaning can take place. This is particularly of importance when for maintaining a proper hygiene at least three times per day a cleaning is performed. Thus the computer can activate the cleaning start device three times per day, and for these periods preferably the three longest off-peak periods are chosen.

An embodiment of a device according to the invention preferably comprises a reservoir for containing a cleaning liquid, a supply line connected to the reservoir for supplying cleaning liquid to the part to be cleaned, and a heating device for heating the cleaning liquid.

A particularly quick cleaning may be obtained when the device is provided with a heating start device for activating the heating device immediately after receipt of the off-peak signal. Due to this the cleaning liquid may already have been brought at the desired temperature at the moment when the actual cleaning is going to start.

In a preferred embodiment the device is provided with a cleaning start device for starting the cleaning, a measuring device for measuring the temperature of the cleaning liquid and for supplying a temperature signal to the cleaning start device, the cleaning start device starting the cleaning after the temperature signal has reached a predetermined temperature value. In this manner the actual cleaning only takes place when the cleaning liquid has reached a desired temperature. Thus it is prevented that the cleaning takes place at a too low temperature, in which case an undesired result would be obtained.

It is advantageous when the device is provided with a memory for containing heating data measured by the temperature measuring device. These heating data may be used i.a. for checking whether the device functions properly.

The milking machine may be used more efficiently in an embodiment of a device according to the invention, said device being characterized in that it is provided with a calculating device for determining, with the aid of the heating data stored in the memory and the momentary temperature of the cleaning liquid as measured by the measuring device, the remaining heating duration until the predetermined temperature value has been reached. Because heating of the cleaning liquid until the desired temperature has been reached takes some time, in this period of time - provided it is considered sufficient by the farmer - another animal may possibly be milked. Alternatively it is possible that priority is given to the milking of an animal, so that the cleaning liquid is kept at temperature until an animal has been milked out. Moreover the cleaning liquid needs not to be kept unnecessary long at temperature before cleaning is started, which is energy-saving.

In order to guarantee i.a. the safety of the animals, in an embodiment the device is provided with a detection device for detecting the presence respectively the absence of an animal in a milking machine to be cleaned. The detection device is preferably adapted to supply a signal to the cleaning start device, the cleaning start device in particular only being capable of being activated on receipt of a signal from the detection device indicating that there is no animal present in the milking machine to be cleaned.

According to the invention, a highly automated functioning of the device may be obtained when the device is provided with an identification system for determining the identity of an animal, said identification system containing data in relation to the estimated milking duration of the animal, the milking machine having an entrance gate controlled by the calculating device, the entrance gate being closed with the aid of an algorithm making use of the estimated milking duration and the remaining heating duration. Such an identification system for determining the identity and the corresponding (updated) estimated milking duration of an animal is known per se.

Preferably the temperature of the cleaning liquid is measured, the cleaning being started after the temperature has reached a predetermined temperature value. Heating data may advantageously be stored in a memory. In particular an automatic milking machine having a robot arm for automatically connecting teat cups to the teats is cleaned.

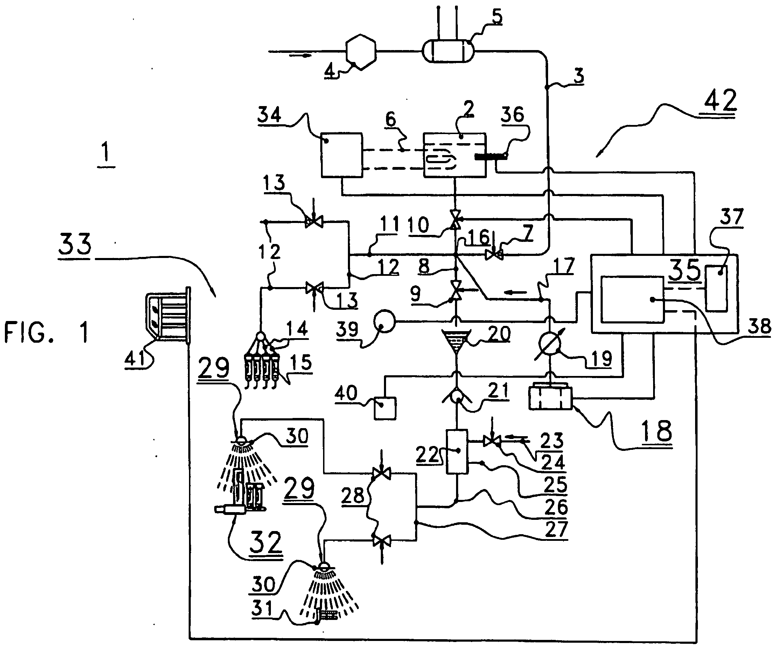

The invention will be explained in further detail with reference to the only Figure 1.
Figure 1 shows an embodiment of a device 1 for milking animals provided with a cleaning device 42 for cleaning at least a part of one or more milking machines 33. It will be obvious that the invention is not limited to this shown embodiment but that within the scope of the person skilled in the art various specific embodiments of the invention are possible.

The device 42 for cleaning at least a part of a milking machine, especially an automatic milking machine, as shown in Figure 1, comprises a reservoir 2 for cleaning liquid (by which is also meant rinsing liquid). A supply line 3 is connected to the reservoir 2. The supply line may be connected itself to the water supply system. In the supply line 3 there is included e.g. a protecting device 4 for preventing cleaning liquid from flowing into the supply line 3 in the direction away from the reservoir 2. In the supply line 3 there is preferably further included a heat exchanger 5 with the aid of which the liquid can be heated. The heat exchanger 5 can make use of the heat given off during the cooling of the milk.

In the reservoir 2 there is included a heating device or heating element 6 by means of which the liquid present in the reservoir 2 can be heated. The heated liquid is used for a heat cleaning known per se.

In the supply line 3 there is included e.g. a first shut-off valve 7. To the supply line 3 there is further connected a first discharge line 8 in which a second shut-off valve 9 is included. Between the first shut-off valve 7 and the reservoir 2 there is included a third shut-off valve 10 in the supply line 3. At the place where the first discharge line 8 is connected to the supply line 3 there is connected a further line 11 splitting up into two lines 12 each provided with a fourth shut-off valve 13. At the end of the lines 12 there are provided connecting elements 14 adapted for being connected to teat cups 15 of a milking machine 33. Via the connecting elements 14 liquid can be supplied to the teat cups 15 and the milk lines connected therewith. It will be obvious that there can also be coupled a milking cluster to the other line 12, while it is also possible that still more lines 12 branch off from the further liquid line 11 for cleaning still other parts of the milking machine 33.

At the crossing 16 where the first discharge line 8 and the further discharge lines 11 are connected to the supply line 3, there is also connected a further line 17 of a metering device 18 with the aid of which an additive, such as a base or an acid, can be supplied to the cleaning or rinsing liquid. The metering device 18 comprises e.g. a computer-controlled metering unit 19.

In the first discharge line 8 there are included a filter 20 and a non-return valve 21, as well as a buffer reservoir 22. The buffer reservoir 22 comprises a supply line 23 through which additives can be supplied to the buffer reservoir 22. The supply line 23 can be closed by means of a fifth shut-off valve 24. To the supply line 23 there can be connected a similar metering device as the metering device 18. To the buffer reservoir 22 there is further connected a compressed air line 25 with the aid of which pressure can be applied to the buffer reservoir 22 and a cleaning or rinsing liquid present therein. The buffer reservoir 22 is further provided with a buffer discharge line 26 splitting up in this embodiment into two further lines 27. It will be obvious that the number of further lines 27 depends on the number of parts of the milking machine that have to be cleaned. Each of the further lines 27 is provided with a sixth shut-off valve 28. At the end of the further lines 27 there is a spray-cleaning device 29 by means of which a part of the milking machine 33 can be cleaned with cleaning and/or rinsing liquid. The device 29 comprises e.g. a spraying head 30. In one case by means of the device 29 there is cleaned a brush 31 adapted for cleaning the teats of the animal, while by means of the other device a part of a robot arm 32 of a not entirely shown milking robot is cleaned.

The device 1 comprises a heating start device 34 starting the heating of the liquid by means of the heating device 6. The moment of starting the heating is preferably immediately after receipt of an off-peak signal, or within a predetermined period of time after receipt of the off-peak signal. Such an off-peak signal is issued by the computer of the cleaning start device 35 on the basis of historical visiting data in the memory 37. When an analysis/calculating device 38 calculates with the aid of these historical data that an off-peak period is expected within a predetermined period of time, such an off-peak signal is issued.

A measuring device 36 measures the temperature of the cleaning liquid and supplies a temperature signal to a cleaning start device 35. When the temperature signal indicates that a predetermined temperature value has been reached, the cleaning start device 35 starts the actual cleaning. For that purpose the cleaning start device 35 is connected to the parts of the device 42 that are relevant to the cleaning.

The memory 37 also provides checking of the device and contains for that purpose heating data measured by the temperature measuring device 36. With the aid of the heating data stored in the memory 37 and the momentary temperature of the cleaning liquid as measured by the measuring device 36, the calculating device 38 can determine the remaining heating duration until the predetermined temperature value has been reached.

A detection device 39 for detecting the presence respectively the absence of an animal in a milking machine 33 to be cleaned may be used for preventing the device from cleaning the milking machine 33 at the moment when an animal is being milked. For that purpose the detection device 39 supplies a signal to the cleaning start device 35.

The device 1 preferably operates as follows:

In the starting phase the off-peak periods of visiting are manually inputted by the farmer, e.g. by means of a keyboard. The number of off-peak periods may be chosen by the farmer, but amounts to at least three from a hygienic point of view.

The farmer may further input a period of time which will be between the estimated beginning of an off-peak period and an off-peak signal to be issued earlier.

When on the basis of the inputted data an off-peak period is going to occur, first the off-peak signal is issued. Said off-peak signal may i.a. ensure the activation of the heating device 6, so that the liquid is heated.

The detection device 39 detects whether or not there is an animal present in the milking machine. When an animal is present, the cleaning start device 35 only starts the actual cleaning on receipt of a signal from the detection device 39 indicating that the animal has left the milking machine 33.

In order to provide a more efficient use of the milking machine 33 and the cleaning device 42, an identification system 40 known per se determines the identity of an animal reporting at the milking machine 33 for being milked. On the basis of the identity, there can be obtained an estimated milking duration of the animal, stored in a memory 37 and possibly continuously updated. When this estimated milking duration is longer than the remaining heating duration, as determined by means of the measuring device 36 and the calculating device 38, an entrance gate 41 to the milking machine 33 remains closed when an animal reports.

Exclusively in the case that the estimated milking duration is shorter than the remaining heating duration, the animal is still allowed to enter the milking machine 33 for being milked, while at the same time the liquid in the reservoir 2 is heated.

When it is no longer possible to milk an animal, after the animal has left the milking machine 33 the actual cleaning is started at the moment when the liquid has reached the desired temperature. The desired temperature depends on the kind of cleaning process being applied. In the case that heat cleaning is applied, the temperature will amount to more than 100°.

The data in the memory in relation to the visits to the milking machine 33 are continuously updated for being able to take a changed visiting behaviour of the dairy animals into account.

As regards cleaning, the average cleaning duration is also taken into account. The off-peak periods in which the cleaning is performed are preferably the longest periods, so that the dairy animals experience little inconvenience as a result of the cleaning of the milking machine 33. When there are more off-peak periods that are eligible for cleaning periods, other parameters may also be decisive for selecting those off-peak periods in which cleaning takes place. Preferably those off-peak periods are selected that coincide with periods in which energy costs are low (e.g. night-tariff supply).

In the case that certain parts of the milking machine 33 can be cleaned or rinsed at a lower temperature, it is possible to ensure by a proper control, also of the relevant shut-off valves, that these parts are cleaned or rinsed at the moment of reaching that temperature. Further it is also possible proportionally to supply an additive, such as e.g. chlorine, acid, base, etc., to the liquid via the metering device 18 during cleaning.

Via the supply line 23 there may also be supplied an additive, such as e.g. sodium hypochlorite, to the buffer reservoir 22. There may be applied pressure to this mixture via the compressed air line 25. Via the further lines 27 and the spraying heads 30 it is possible to clean, c.q. to disinfect the brush 31 and the robot arm 32 under high pressure.

## Claims

1. A device (1) for milking animals, said device (1) being provided with:
a cleaning device (42) for cleaning at least a part of a milking machine (33), said cleaning device (42) comprising a cleaning start device (35) for starting the cleaning, and
a milking machine (33) provided with a computer having a memory (37), the computer being adapted to store the points of time of the visits of the animals to the milking machine (33) in the memory (37), **characterized in that** the cleaning start device (35) is activated by means of a cleaning start signal issued by the computer, on the basis of historical data in relation to the points of time of the visits of the animals stored in the memory (37), and **in that** the computer comprises an analysis-unit (38) for determining the off-peak periods in the visits to the milking machine (33), wherein the computer, with the aid of the historical data, issues an off-peak signal indicating that an off-peak period is expected.

2. A device (1) as claimed in claim 1, **characterized in that** the milking machine (33) is provided with an identification system (40) for determining the identity of animals and detecting that animals visit the milking machine (33), the computer storing the points of time of the visits of the animals in the memory (37) with the aid of data from the identification system (40).

3. A device (1) as claimed in claim 1, or 2, **characterized in that** the average cleaning duration is stored in the memory (37) of the computer.

4. A device (1) as claimed in claim 3, **characterized in that**, with the aid of the historical data, the computer issues the off-peak signal indicating that an off-peak period is expected within a pre-determined period.

5. A device (1) as claimed in claim 2 or 4, **characterized in that**, on reaching the beginning of an off-peak period with an anticipated duration which is at least comparable with the average cleaning duration, the computer issues an activation signal for the cleaning start device (35).

6. A device (1) as claimed in any one of the preceding claims, **characterized in that** the computer activates the cleaning start device (35) three times per day.

7. A device (1) as claimed in any one of the preceding claims, **characterized in that** the device (1) comprises a reservoir (2) for containing a cleaning liquid, a supply line (3) connected to the reservoir (2) for supplying cleaning liquid to the part (15, 31, 32) to be cleaned, and a heating device (6) for heating the cleaning liquid.

8. A device (1) as claimed in claim 4, **characterized in that** the device (1) is provided with a heating start device (34) for activating the heating device (6) immediately after receipt of the off-peak signal.

9. A device (1) as claimed in claim 7 or 8, **characterized in that** the device (1) is provided with a measuring device (36) for measuring the temperature of the cleaning liquid and for supplying a temperature signal to the cleaning start device (35), the cleaning start device (35) starting the cleaning after the temperature signal has reached a predetermined temperature value.

10. A device (1) as claimed in claim 9, **characterized in that** the device (1) is provided with a memory (37) for containing heating data measured by the temperature measuring device (36).

11. A device (1) as claimed in claim 10, **characterized in that** the device (1) is provided with a calculating device (38) for determining, with the aid of the heating data stored in the memory (37) and the momentary temperature of the cleaning liquid as measured by the measuring device (36), the remaining heating duration until the predetermined temperature value has been reached.

12. A device (1) as claimed in any one of the preceding claims, **characterized in that** the device (1) is provided with a detection device (39) for detecting the presence respectively the absence of an animal in a milking machine (33) to be cleaned.

13. A device (1) as claimed in claim 12, **characterized in that** the detection device (39) is adapted to supply a signal to the cleaning start device (35).

14. A device (1) as claimed in claim 13, **characterized in that** the cleaning start device (35) can only be activated on receipt of a signal from the detection device (39) indicating that there is no animal present in the milking machine (33) to be cleaned.

15. A device (1) as claimed in claim 14, **characterized in that** the device (1) is provided with an identification system (40) for determining the identity of an animal, said identification system (40) containing data in relation to the anticipated milking duration of the animal, **in that** the milking machine (33) has an entrance gate (41) controlled by the calculating device (38), the entrance gate (41) being closed with the aid of an algorithm making use of the anticipated milking duration and the remaining heating duration.

16. A device as claimed in any one of the preceding claims, **characterized in that** the milking machine is constituted by an automatic milking machine having a robot arm for automatically connecting a teat cup to a teat.

## Patentansprüche

1. Vorrichtung (1) zum Melken von Tieren, wobei die Vorrichtung (1) versehen ist mit:
- einer Reinigungsvorrichtung (42) zum Reinigen zumindest eines Teils einer Melkmaschine (33), wobei die Reinigungsvorrichtung (42) eine Reinigungsstartvorrichtung (35) zum Starten der Reinigung umfasst, und
- einer Melkmaschine (33), die einen Computer mit einem Speicher (37) aufweist, wobei der Computer geeignet ist, die Zeitpunkte der Besuche der Tiere bei der Melkmaschine (33) in dem Speicher (37) zu speichern,
**dadurch gekennzeichnet, dass** die Reinigungsstartvorrichtung (35) durch ein Reinigungsstartsignal aktiviert wird, das von dem Computer auf der Basis von in dem Speicher (37) gespeicherten historischen Daten bezüglich der Zeitpunkte der Besuche der Tiere ausgegeben wird, und **dadurch, dass** der Computer eine Analysiereinheit (38) umfasst, um die Belastungstal-Zeiträume von Besuchen der Melkmaschine (33) zu ermitteln, wobei der Computer mit Hilfe der historischen Daten ein Belastungstal-Signal ausgibt, das angibt, dass ein Belastungstal-Zeitraum erwartet wird.

2. Vorrichtung (1) nach Anspruch 1,
**dadurch gekennzeichnet, dass** die Melkmaschine (33) mit einem Identifikationssystem (40) versehen ist, um die Identität von Tieren zu ermitteln und zu detektieren, dass Tiere die Melkmaschine (33) besuchen, wobei der Computer mit Hilfe von Daten aus dem Identifikationssystem (40) die Zeitpunkte der Besuche der Tiere in dem Speicher (37) speichert.

3. Vorrichtung (1) nach Anspruch 1 oder 2,
**dadurch gekennzeichnet, dass** die durchschnittliche Reinigungsdauer im Speicher (37) des Computers gespeichert ist.

4. Vorrichtung (1) nach Anspruch 3,
**dadurch gekennzeichnet, dass** der Computer mit Hilfe der historischen Daten das Belastungstal-Signal ausgibt, das anzeigt, dass innerhalb eines vorgegebenen Zeitraumes ein Belastungstal-Zeitraum erwartet wird.

5. Vorrichtung (1) nach Anspruch 2 oder 4,
**dadurch gekennzeichnet, dass** der Computer zu Beginn eines Belastungstal-Zeitraumes von einer voraussichtlichen Dauer, die mit der durchschnittlichen Reinigungsdauer zumindest vergleichbar ist, ein Aktivierungssignal für die Reinigungsstartvorrichtung (35) ausgibt.

6. Vorrichtung (1) nach einem der vorhergehenden Ansprüche,
**dadurch gekennzeichnet, dass** der Computer die Reinigungsstartvorrichtung (35) dreimal pro Tag aktiviert.

7. Vorrichtung (1) nach einem der vorhergehenden Ansprüche,
**dadurch gekennzeichnet, dass** die Vorrichtung (1) einen Behälter (2) zur Aufnahme einer Reinigungsflüssigkeit, eine mit dem Behälter (2) verbundene Zuführleitung (3) zum Zuführen von Reinigungsflüssigkeit zu dem zu reinigenden Teil (15, 31, 32) und eine Heizvorrichtung (6) zum Erwärmen der Reinigungsflüssigkeit umfasst.

8. Vorrichtung (1) nach Anspruch 4,
**dadurch gekennzeichnet, dass** die Vorrichtung (1) mit einer Heizungsstartvorrichtung (34) versehen ist, um die Heizungsvorrichtung (6) unmittelbar nach Empfang des Belastungstal-Signals zu aktivieren.

9. Vorrichtung (1) nach Anspruch 7 oder 8,
**dadurch gekennzeichnet, dass** die Vorrichtung (1) mit einer Messvorrichtung (36) zum Messen der Temperatur der Reinigungsflüssigkeit und zur Ausgabe eines Temperatursignals an die Reinigungsstartvorrichtung (35) versehen ist, wobei die Reinigungsstartvorrichtung (35) den Reinigungsvorgang startet, wenn das Temperatursignal einen vorgegebenen Temperaturwert erreicht hat.

10. Vorrichtung (1) nach Anspruch 9,
**dadurch gekennzeichnet, dass** die Vorrichtung (1) mit einem Speicher (37) zum Enthalten von durch die Temperaturmessvorrichtung (36) ermittelten Heizungsdaten versehen ist.

11. Vorrichtung (1) nach Anspruch 10,
**dadurch gekennzeichnet, dass** die Vorrichtung (1) mit einer Rechenvorrichtung (38) versehen ist, um mit Hilfe der in dem Speicher (37) gespeicherten Heizungsdaten und der von der Messvorrichtung (36) gemessenen, momentanen Temperatur der Reinigungsflüssigkeit die restliche Heizungsdauer bis zum Erreichen des vorgegebenen Temperaturwertes zu ermitteln.

12. Vorrichtung (1) nach einem der vorhergehenden Ansprüche,
**dadurch gekennzeichnet, dass** die Vorrichtung (1) mit einer Detektionsvorrichtung (39) zum Ermitteln der Anwesenheit bzw. der Abwesenheit eines Tieres in einer zu reinigenden Melkmaschine (33) versehen ist.

13. Vorrichtung (1) nach Anspruch 12,
**dadurch gekennzeichnet, dass** die Detektionsvorrichtung (39) geeignet ist, ein Signal an die Reinigungsstartvorrichtung (35) zu geben.

14. Vorrichtung (1) nach Anspruch 13,
**dadurch gekennzeichnet, dass** die Reinigungsstartvorrichtung (35) nur dann aktiviert werden kann, wenn sie ein Signal von der Detektionsvorrichtung (39) bekommt, das anzeigt, dass sich in der zu reinigenden Melkmaschine (33) kein Tier aufhält.

15. Vorrichtung (1) nach Anspruch 14,
**dadurch gekennzeichnet, dass** die Vorrichtung (1) mit einem Identifikationssystem (40) zur Ermittlung der Identität eines Tieres versehen ist, wobei das Identifikationssystem (40) Daten bezüglich der voraussichtlichen Melkdauer des Tieres enthält, und dass die Melkmaschine (33) eine von der Rechenvorrichtung (38) gesteuerte Eingangstür (41) aufweist, wobei die Eingangstür (41) mit Hilfe eines Algorithmus unter Berücksichtigung der voraussichtlichen Melkdauer und der restlichen Heizungsdauer geschlossen wird.

16. Vorrichtung nach einem der vorhergehenden Ansprüche,
**dadurch gekennzeichnet, dass** die Melkmaschine durch eine automatische Melkmaschine gebildet ist, die einen Roboterarm zum automatischen Anschließen eines Zitzenbechers an eine Zitze hat.

## Revendications

1. Dispositif (1) pour traire les animaux, ledit dispositif (1) comprenant :
- un dispositif de nettoyage (42) pour nettoyer au moins une partie d'une machine à traire (33), ledit dispositif de nettoyage (42) comprenant un dispositif de lancement du nettoyage (35) pour lancer le nettoyage, et
- une machine à traire (33) pourvue d'un ordinateur ayant une mémoire (37), l'ordinateur étant adapté pour stocker les heures des visites des animaux à la machine à traire (33) dans la mémoire (37), **caractérisé en ce que** le dispositif de lancement du nettoyage (35) est activé au moyen d'un signal de lancement du nettoyage émis par l'ordinateur, en se basant sur les données historiques relatives aux heures des visites des animaux stockées dans la mémoire (37), et **en ce que** l'ordinateur comprend une unité d'analyse (38) pour déterminer les périodes creuses dans les visites à la machine à traire (33), l'ordinateur émettant, à l'aide des données historiques, un signal de période creuse indiquant qu'une période creuse est prévue

2. Dispositif (1) selon la revendication 1, **caractérisé en ce que** la machine à traire (33) est pourvue d'un système d'identification (40) pour déterminer l'identité des animaux et détecter que des animaux visitent la machine à traire (33), l'ordinateur stockant les heures des visites des animaux dans la mémoire (37) à l'aide de données provenant du système d'identification (40).

3. Dispositif (1) selon la revendication 1 ou 2, **caractérisé en ce que** la durée de nettoyage moyenne est stockée dans la mémoire (37) de l'ordinateur.

4. Dispositif (1) selon la revendication 3, **caractérisé en ce que,** à l'aide des données historiques, l'ordinateur émet le signal de période creuse indiquant qu'une période creuse est prévue dans une période prédéterminée.

5. Dispositif (1) selon la revendication 2 ou 4, **caractérisé en ce que,** lorsque le début d'une période creuse est atteint avec une durée anticipée qui est au moins comparable à la durée de nettoyage moyenne, l'ordinateur émet un signal d'activation pour le dispositif de lancement du nettoyage (35).

6. Dispositif (1) selon l'une quelconque des revendications précédentes, **caractérisé en ce que** l'ordinateur active le dispositif de lancement du nettoyage (35) trois fois par jour.

7. Dispositif (1) selon l'une quelconque des revendications précédentes, **caractérisé en ce que** le dispositif (1) comprend un réservoir (2) pour contenir un liquide de nettoyage, un tuyau d'alimentation (3) raccordé au réservoir (2) pour fournir un liquide de nettoyage à la partie (15, 31, 32) devant être nettoyée, et une unité de chauffage (6) pour chauffer le liquide de nettoyage.

8. Dispositif (1) selon la revendication 4, **caractérisé en ce que** le dispositif (1) est pourvu d'une unité de lancement du chauffage (34) pour activer le dispositif de chauffage (6) immédiatement après réception du signal de période creuse.

9. Dispositif (1) selon la revendication 7 ou 8, **caractérisé en ce que** le dispositif (1) est pourvu d'un dispositif de mesure (36) pour mesurer la température du liquide de nettoyage et pour fournir un signal de température au dispositif de lancement du nettoyage (35), le dispositif de lancement du nettoyage (35) lançant le nettoyage une fois que le signal de température a atteint une valeur de température prédéterminée.

10. Dispositif (1) selon la revendication 9, **caractérisé en ce que** le dispositif (1) est pourvu d'une mémoire (37) pour contenir les données de chauffage mesurées par le dispositif de mesure de température (36).

11. Dispositif (1) selon la revendication 10, **caractérisé en ce que** le dispositif (1) est pourvu d'un dispositif de calcul (38) pour déterminer, à l'aide des données de chauffage stockées dans la mémoire (37) et de la température provisoire du liquide de nettoyage telle que mesurée par le dispositif de mesure (36), la durée de chauffage restante jusqu'à ce que la valeur de température prédéterminée ait été atteinte.

12. Dispositif (1) selon l'une quelconque des revendications précédentes, **caractérisé en ce que** le dispositif (1) est pourvu d'un dispositif de détection (39) pour détecter la présence, respectivement l'absence, d'un animal dans une machine à traire (33) devant être nettoyée.

13. Dispositif (1) selon la revendication 12, **caractérisé en ce que** le dispositif de détection (39) est conçu pour fournir un signal au dispositif de lancement du nettoyage (35).

14. Dispositif (1) selon la revendication 13, **caractérisé en ce que** le dispositif de lancement du nettoyage (35) peut uniquement être activé sur réception d'un signal provenant du dispositif de détection (39) indiquant qu'aucun animal n'est présent dans la machine à traire (33) devant être nettoyée.

15. Dispositif (1) selon la revendication 14, **caractérisé en ce que** le dispositif (1) est pourvu d'un système d'identification (40) pour déterminer l'identité d'un animal, ledit système d'identification (40) contenant les données relatives à la durée de traite anticipée de l'animal, **en ce que** la machine de traite (33) a une porte d'entrée (41) contrôlée par le dispositif de calcul (38), la porte d'entrée (41) étant fermée à l'aide d'un algorithme utilisant la durée de traite anticipée et la durée de chauffage restante.

16. Dispositif selon l'une quelconque des revendications précédentes, **caractérisé en ce que** la machine à traire est constituée d'une machine à traire automatique ayant un bras de robot pour raccorder automatiquement un gobelet trayeur à un trayon.
